# EUROPÄISCHE PATENTSCHRIFT

(11) **EP 2 543 782 B1**
(45) Veröffentlichungstag und Bekanntmachung des Hinweises auf die Patenterteilung: **06.01.2016**
(21) Anmeldenummer: 12167616.7
(22) Anmeldetag: 11.05.2012
(51) Int. Cl.: E03D 5/094, E03C 1/23, E03D 5/10, F16K 31/05

(54) **Vorrichtung zur Betätigung eines sanitären Ablaufventils, insbesondere Spülkasten- oder Badewannen-Ablaufventils**
Device for actuating a sanitary drainage valve, in particular flushing valve or bath tub drainage valve
Dispositif d'actionnement d'un clapet de sortie sanitaire, en particulier clapet de chasse d'eau ou baignoire

(30) Priorität: 07.07.2011 DE 202011103214 U
(43) Veröffentlichungstag der Anmeldung: 09.01.2013
(73) Patentinhaber: Viega GmbH & Co. KG, 57439 Attendorn (DE)
(72) Erfinder: Fulgoni, Frank, 59846 Sundern (DE); Hüpper, Stefan, 57482 Wenden (DE)
(74) Vertreter: Cohausz & Florack

(56) Entgegenhaltungen:
- EP-A2- 0 950 939
- DE-A1-102005 037 122
- DE-U1-202007 003 163

## Beschreibung

Die Erfindung betrifft eine Vorrichtung zur Betätigung eines sanitären Ablaufventils, insbesondere Spülkasten-Ablaufventils oder Badewannen-Ablaufventils, mit mindestens einem elektromotorischen Antrieb und einer mindestens ein erstes manuelles Betätigungselement aufweisenden manuellen Auslöseeinrichtung, wobei der elektromotorische Antrieb über mindestens einen ersten Bowdenzug das Ablaufventil betätigt und das mindestens eine erste manuelle Betätigungselement mit mindestens einem zweiten Bowdenzug zur Betätigung des Ablaufventils versehen ist.

Eine derartige Vorrichtung ist beispielsweise aus der DE 20 2007 003 163 U1 bekannt.

Herkömmliche Betätigungsplatten zur Auslösung einer WC- oder Urinalspülung funktionieren rein mechanisch. Sie weisen üblicherweise eine oder zwei Betätigungstasten auf, die beweglich, meist schwenkbar in der Betätigungsplatte gelagert sind. Des Weiteren sind auch Vorrichtungen zur Auslösung einer WC- oder Urinalspülung bekannt, die einen elektromagnetischen oder elektromotorischen Antrieb aufweisen.

Die DE 20 2007 003 163 U1 offenbart eine Vorrichtung zur elektrischen Auslösung eines Spülvorgangs in einem sanitären Spülkasten, umfassend ein in dem Spülkasten angeordnetes Ablaufventil, eine elektronische Steuerung und mindestens einen an der elektronischen Steuerung angeschlossenen Tastsensor zur Betätigung des Ablaufventils. Dabei ist dem Ablaufventil ein elektrischer Linearantrieb zugeordnet, der bei Berührung des mindestens einen Tastsensors von der elektronischen Steuerung angesteuert wird und das Ablaufventil über einen Bowdenzug betätigt. Um sicherzustellen, dass im Falle eines Stromausfalls eine definierte Wassermenge zur Spülung des angeschlossenen Toilettenbeckens ausgelöst werden kann, ist das Ablaufventil zusätzlich mit einer rein mechanisch ausgeführten Auslöseeinrichtung versehen. Diese mechanische Auslöseeinrichtung weist ein manuelles Betätigungselement, beispielsweise eine Drucktaste auf, wobei das manuelle Betätigungselement mit einem weiteren Bowdenzug zur Betätigung des Ablaufventils verbunden ist.

Sanitäre Spülkästen sind heutzutage üblicherweise in Zweimengentechnik ausgeführt, d.h. sie ermöglichen die Auslösung einer Vollspülung mit einer relativ großen Spülwassermenge sowie alternativ - für Fälle, in denen eine geringere Spülwassermenge ausreicht - die Auslösung einer Teilspülung mit einer relativ kleinen Spülwassermenge.

Bei einer gemäß der DE 20 2007 003 163 U1 ausgeführten Vorrichtung hatte sich herausgestellt, dass es nicht möglich war, das Ablaufventil sowohl motorisch als auch bei Bedarf manuell, rein mechanisch wahlweise mit kleiner oder großer Spülwassermenge auslösen zu können.

Der vorliegenden Erfindung lag daher die Aufgabe zugrunde, eine Vorrichtung der eingangs genannten Art dahingehend weiterzuentwickeln, dass deren Ablaufventil sowohl motorisch als auch bei Bedarf manuell, rein mechanisch mit kleiner und großer Spülwassermenge betrieben werden kann.

Diese Aufgabe wird erfindungsgemäß durch eine Vorrichtung mit den Merkmalen des Anspruchs 1 gelöst.

Die erfindungsgemäße Vorrichtung ist dadurch gekennzeichnet, dass der mindestens eine erste Bowdenzug, der dem elektromotorischen Antrieb zugeordnet ist, mit mindestens einem ersten Mitnehmer gekoppelt ist, und der mindestens eine zweite Bowdenzug, der dem mindestens einen ersten manuellen Betätigungselement zugeordnet ist, mit mindestens einem zweiten Mitnehmer gekoppelt ist, wobei die Mitnehmer relativ zueinander bewegbar sind, und wobei der jeweilige Mitnehmer bei einer auf ihn über den mit ihm gekoppelten Bowdenzug übertragenden Bewegung ein Kupplungselement mitnimmt, an dem mindestens ein dritter Bowdenzug angekoppelt ist, der zur Betätigung des Ablaufventils mit demselben gekoppelt ist.

Die erfindungsgemäße Vorrichtung weist somit eine Multibetätigungskomponente für Bowdenzüge auf, die es ermöglicht, mit einem geeigneten Zweimengen-Ablaufventil eine Vollspülung und wahlweise eine Teilspülung jeweils mit rein mechanisch funktionierenden Betätigungssystemen und eine Voll- oder Teilspülung mit einem elektromotorischen Antrieb auszulösen. Die Multibetätigungskomponente der erfindungsgemäßen Vorrichtung kann auch als Bowdenzugweiche bezeichnet werden.

Die Bowdenzugweiche ermöglicht die Verwirklichung von mehr als zwei Betätigungsvarianten. Mehrere unabhängig voneinander betätigbare Bowdenzüge sind dabei mit einem gemeinsamen Bowdenzug zur Auslösung eines Ablaufventils bzw. zur Betätigung eines Auslösehebels des Ablaufventils gekoppelt. Mit der erfindungsgemäßen Vorrichtung können folglich mehrere Betätigungsvarianten miteinander kombiniert werden.

In einer bevorzugten Ausgestaltung weist die manuelle Auslöseeinrichtung der erfindungsgemäßen Vorrichtung mindestens ein zweites manuelles Betätigungselement auf, das mit mindestens einem vierten Bowdenzug versehen ist, der zur Betätigung des Ablaufventils mit demselben gekoppelt ist. Bei Anwendung der erfindungsgemäßen Vorrichtung in Verbindung mit einem Zweimengen-Ablaufventil eines Toilettenspülkastens können das zweite manuelle Betätigungselement und der mindestens eine vierte Bowdenzug der Auslösung einer Teilspülung dienen, wohingegen das erste manuelle Betätigungselement und der diesem zugeordnete mindestens eine Bowdenzug der Auslösung einer Vollspülung zugeordnet sind.

Eine weitere bevorzugte Ausgestaltung der erfindungsgemäßen Vorrichtung ist dadurch gekennzeichnet, dass die Mitnehmer und das Kupplungselement in einem Gehäuse bewegbar, vorzugsweise verschiebbar gelagert sind, wobei das Gehäuse einen schalenförmigen Gehäuseteil und einen abnehmbaren oder aufklappbaren Deckel aufweist. Das Gehäuse bietet neben einer einfachen Montierbarkeit und zuverlässigen beweglichen Lagerung der Mitnehmer und des Kupplungselementes auch einen sicheren Schutz dieser Komponenten vor äußeren mechanischen Einwirkungen.

Nach einer weiteren bevorzugten Ausgestaltung der erfindungsgemäßen Vorrichtung weisen der Deckel und das schalenförmige Gehäuseteil einander zugeordnete Rastelemente auf. Die Rastelemente ermöglichen ein besonders einfaches und schnelles Verbinden der genannten Gehäuseteile und somit ein einfaches und schnelles Schließen des Gehäuses.

Eine weitere vorteilhafte Ausgestaltung der erfindungsgemäßen Vorrichtung sieht vor, dass das Gehäuse Nuten, Schlitze und/oder Rippen zur Führung des Kupplungselements und/oder der Mitnehmer aufweist. Die genannten Führungsmittel sind dabei in dem Gehäuse integriert. Die Herstellung und Montage weiterer separater Führungselemente ist somit nicht erforderlich, so dass unnötige Material- und Fertigungskosten vermieden werden können.

Eine weitere vorteilhafte Ausgestaltung der erfindungsgemäßen Vorrichtung sieht vor, dass in der Wandung des Gehäuses Öffnungen oder Ausnehmungen ausgebildet sind, an denen Hülsen zur Aufnahme eines Endes des schlauchförmigen Mantels des ersten, zweiten und dritten Bowdenzuges formschlüssig festgelegt sind. Diese Ausgestaltung ermöglicht eine einfache und zuverlässige Verbindung der genannten Bowdenzüge mit dem Gehäuse.

In funktioneller Hinsicht ist es vorteilhaft, wenn gemäß einer weiteren bevorzugten Ausgestaltung der erfindungsgemäßen Vorrichtung das Kupplungselement und/oder die Mitnehmer mit mindestens einem Federelement in eine Ausgangsposition vorgespannt sind. Diese Ausgestaltung vereinfacht die manuelle Betätigung des sanitären Ablaufventils. Ein für die manuelle Betätigung des Ablaufventils vorgesehenes Bedienelement, beispielsweise eine Drucktaste, wird nach der manuellen Betätigung des Ablaufventils in eine Ausgangsposition zurückbewegt, wobei das das Kupplungselement und/oder die Mitnehmer beaufschlagende Federelement die Bewegung des Bedienelements in seine Ausgangsposition unterstützt.

Nach einer weiteren bevorzugten Ausgestaltung der erfindungsgemäßen Vorrichtung ist das Kupplungselement mit einem plattenförmigen Element versehen, das Nuten, Schlitze und/oder Rippen zur Führung der Mitnehmer aufweist. Der jeweilige Mitnehmer weist dabei vorzugsweise einen an einer Kante des plattenförmigen Elements des Kupplungselements angreifenden Vorsprung auf. Diese Ausgestaltung ermöglicht eine kompakte Bauweise der Bowdenzugweiche bei sehr zuverlässiger Funktion. Die Herstellung und Montage separater Führungselemente ist insoweit wiederum nicht erforderlich, was sich günstig auf die Material- und Fertigungskosten, insbesondere die Montagekosten auswirkt.

Weitere bevorzugte und vorteilhafte Ausgestaltungen der erfindungsgemäßen Vorrichtung sind in den Unteransprüchen angegeben.

Nachfolgend wird die Erfindung anhand einer ein Ausführungsbeispiel darstellenden Zeichnung näher erläutert. Es zeigen:
- Fig. 1: einen Abschnitt eines aus der DE 20 2007 003 163 U1 bekannten Unterputzspülkastens in einer perspektivischen Vertikalschnittansicht;
- Fig. 2: ein erfindungsgemäßes System umfassend einen elektromotorischen Antrieb, manuelle Betätigungselemente in Form von Kraftwandlern, Bowdenzüge, eine Bowdenzugweiche sowie eine mit einem Spülkasten-Ablaufventil lösbar verbindbare Halterung, in perspektivischer Darstellung;
- Figuren 3: und 4 die Bowdenzugweiche der Fig. 2 in ihrer Nullstellung (Ausgangsstellung) mit Abschnitten der daran montierten Bowdenzüge, in perspektivischer Ansicht bzw. Draufsicht;
- Figuren 5: und 6 die Bowdenzugweiche gemäß den Figuren 3 und 4 in einer durch den elektromotorischen Antrieb bewirkten Betätigungsstellung, in perspektivischer Ansicht bzw. Draufsicht; und
- Figuren 7: und 8 die Bowdenzugweiche gemäß den Figuren 3 und 4 in einer durch ein manuelles Betätigungselement bewirkten Betätigungsstellung, in perspektivischer Ansicht bzw. Draufsicht.

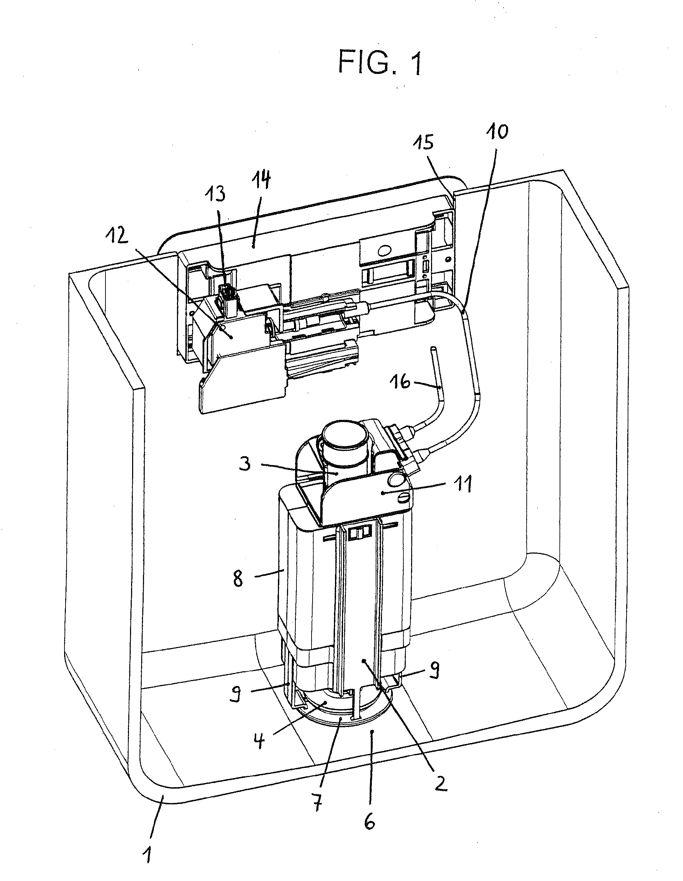

Fig. 1 zeigt einen Abschnitt eines Unterputzspülkastens 1. Der Spülkasten 1 weist ein Ablaufventil 2 auf, das an einer Bodenöffnung des Spülkastenkörpers montiert ist. Der heb- und senkbare Ventilkörper 3 des Ablaufventils 2 ist als Überlaufrohr ausgebildet, an dessen unterem Ende ein flanschförmiger Dichtungsring 4 angebracht ist. Der Dichtungsring 4 liegt bei geschlossenem Ablaufventil 2 auf einem Ventilsitz auf, der an der Oberseite eines den Spülkastenboden 6 durchdringenden Rohrstutzens ausgebildet ist. Befindet sich im Spülkasten 1 eine bestimmte Wassermenge, so drückt die Wassersäule den Dichtungsring 4 gegen den ringförmigen Ventilsitz. An dem Rohrstutzen ist ein ringförmiger Flansch 7 angeformt, der über einen Dichtungsring (nicht gezeigt) am Spülkastenboden 6 wasserdicht anliegt.

Das Ablaufventil 2 weist ein Gehäuse 8 auf, das über stegförmige Stützelemente 9 mit dem Flansch 7 verbunden ist. Der als Überlaufrohr ausgebildete Ventilkörper 3 ist mit einem Schwimmer (nicht gezeigt) versehen, der in dem Gehäuse 8 geführt ist.

Das Ablaufventil 2 ist mit einem schwenkbar gelagerten Hebel (nicht gezeigt) versehen, der bei einer Schwenkbewegung ein Anheben des Ventilkörpers 3 bewirkt und mit einem Bowdenzug 10 verbunden ist. Der Hebel ist in einer Halterung 11 gelagert, die mit dem Gehäuse 8 des Ablaufventils 2 lösbar verbunden ist. An der Außenseite des rohrförmigen Ventilkörpers 3 ist ein Vorsprung (nicht gezeigt) ausgebildet, den der Hebel untergreift. Mittels des Bowdenzuges 10 lässt sich der Hebel nach oben schwenken, so dass der Hebel den Vorsprung des Ventilkörpers 3 erfasst und diesen gegen den auf den Dichtungsring 4 lastenden Druck der Wassersäule anhebt. Dabei genügt ein geringes Anheben des Dichtungsringes 4 vom Ventilsitz. Das weitere Anheben des Ventilkörpers 3 wird bei mit Wasser gefülltem Spülkasten 1 durch den am Ventilkörper 3 befestigten Schwimmer bewirkt.

Die Betätigung des Hebels erfolgt über den Bowdenzug mittels eines elektromotorischen Antriebes 12, vorzugsweise eines elektrischen Linearantriebes. Der Antrieb (Motor) 12 kann auch als Linearmotor oder translatorisch wirkender Aktor bezeichnet werden. Mit 13 ist ein Elektroanschluss für den Motor 12 bezeichnet. Der elektromotorischen Antrieb 12 ist an einem Einbaurahmen 14 montiert, der für eine Montage an einer Revisionsöffnung 15 des Spülkastens 1 hergerichtet ist.

Zur Ansteuerung des elektromotorischen Antriebes 12 ist eine elektronische Steuerung vorgesehen, an der mindestens ein Tastschalter oder Tastsensor (nicht gezeigt) zur Betätigung des Ablaufventils 2 angeschlossen ist. Vorzugsweise sind an der elektronischen Steuerung jedoch mindestens zwei Tastschalter angeschlossen, wobei ein Tastschalter der Auslösung einer Vollspülung mit einer definierten Wassermenge dient und ein zweiter Tastschalter der Auslösung einer Teilspülung mit einer geringeren definierten Wassermenge dient.

Der in Fig. 1 dargestellte Spülkasten 1 bietet zudem die Möglichkeit einer von dem elektromotorischen Antrieb unabhängigen manuellen Betätigung (Auslösung) des Ablaufventils 2. Hierzu ist das Ablaufventil 2 zusätzlich mit einer rein mechanischen Auslöseeinrichtung versehen. Wie in Fig. 1 angedeutet ist, weist die mechanische Auslöseeinrichtung ein manuelles Betätigungselement auf, das mit einem weiteren Bowdenzug 16 zur Betätigung des Ablaufventils 2 verbunden ist. Das manuelle Betätigungselement (in Fig. 1 nicht gezeigt) ist beispielsweise als Drucktaste, Handgriff oder Zugknopf ausgebildet und vorzugsweise an einer verdeckten Stelle an der Außenseite einer die Revisionsöffnung 15 abdeckenden Abdeckplatte oder an einer anderen Stelle der Außenseite der den Spülkasten 1 beinhaltenden Wand angeordnet und für den Benutzer bei Bedarf zugänglich.

Für die manuelle Betätigung (Auslösung) des Ablaufventils 2 wird ein weiterer Hebel (nicht gezeigt) genutzt, der ebenfalls in der Halterung 11 schwenkbar gelagert ist und bei einer Schwenkbewegung ein Anheben des Ventilkörpers 3 des Ablaufventils 2 bewirkt.

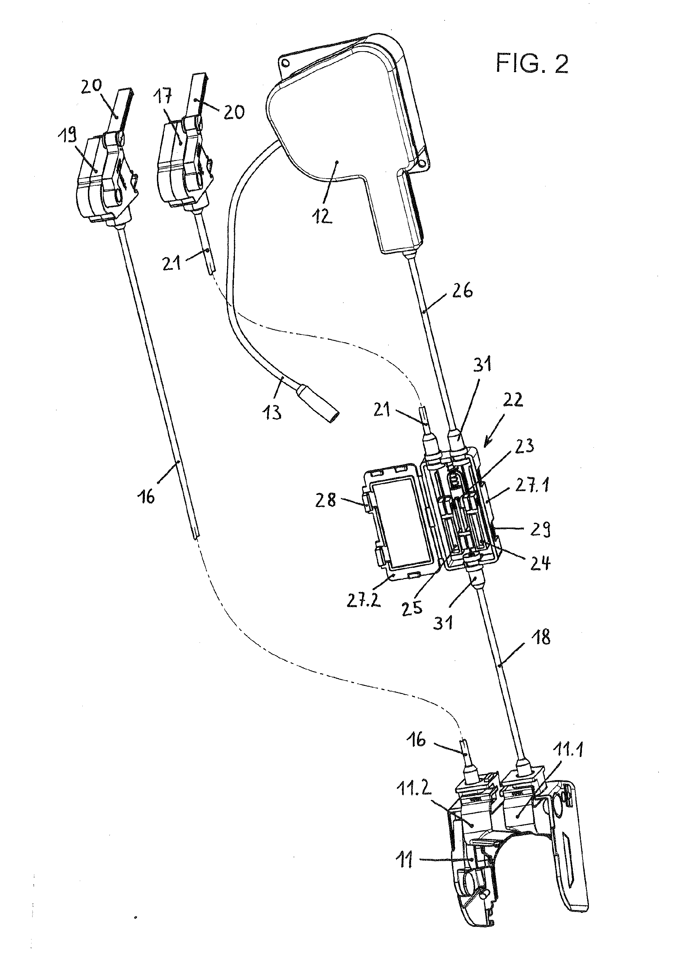

In Fig. 2 ist eine erfindungsgemäße Vorrichtung dargestellt, welche es ermöglicht, einen Hebel oder ein anderes Stellelement an dem Ablaufventil 2 zum Anheben oder Bewegen des Ventilkörpers 3 wahlweise mit einem elektromotorischen Antrieb 12 oder (unabhängig von dem Antrieb 12) mit einem manuellen Betätigungselement 17 zu betätigen. Mit 11 ist eine mit einem Spülkasten-Ablaufventil 2 gemäß Fig. 1 lösbar verbindbare Halterung bezeichnet. An der Halterung 11 sind mindestens zwei Hebel oder Stellelemente zum Anheben des Ventilkörpers 3 des Ablaufventils 2 beweglich gelagert. Der erste Hebel bzw. das erste Stellelement 11.1 dient der Auslösung einer Vollspülung, bei der eine Wassermenge im Bereich von zum Beispiel 6 bis 9 Liter über ein am Spülkasten 1 angeschlossenes Spülrohr in eine angeschlossene Toilettenschüssel geleitet wird, wohingegen das zweite Stellelement 11.2 bzw. der zweite Hebel an der Halterung 11 der Auslösung einer Teilspülung dient, bei der eine Wassermenge von zum Beispiel ca. 3 Liter aus dem Spülkasten 1 in die angeschlossene Toilettenschüssel geleitet wird.

An der Halterung 11 sind Bowdenzüge 16, 18, zur Betätigung der dem Ablaufventil 2 zugeordneten Hebel bzw. Stellelemente 11.1, 11.2 montiert. Einer der Hebel bzw. eines (11.1) der Stellelemente 11.1, 11.2 kann wahlweise mittels des Motors 12 oder mittels eines manuellen Betätigungselements 17 über den Bowdenzug 18 betätigt werden. Der andere Hebel bzw. das andere Stellelement 11.2 ist über den Bowdenzug 16 mit einem zweiten manuellen Betätigungselement 19 gekoppelt.

Die manuellen Betätigungselemente 17, 19 weisen jeweils einen schwenkbar gelagerten Hebel 20 auf. Sie können auch als Kraftwandler bezeichnet werden. Denn sie wandeln eine auf den Hebel 20 ausgeübte Druckkraft in eine auf den angeschlossenen Bowdenzug 16 bzw. 21 wirkende Zugkraft um.

Um einen der Hebel bzw. eines (11.1) der Stellelemente 11.1, 11.2 wahlweise elektromotorisch oder manuell betätigen zu können, weist die erfindungsgemäße Vorrichtung eine Bowdenzugweiche 22 auf. Die Bowdenzugweiche 22 umfasst ein beweglich gelagertes Kupplungselement 23, an dem der mit der Halterung 11 verbundene Bowdenzug 18 angekoppelt ist. Ferner umfasst die Bowdenzugweiche 22 (mindestens) zwei Mitnehmer 24, 25, die relativ zueinander sowie unabhängig voneinander bewegbar sind, und zwar mindestens einen ersten Mitnehmer 24, der mit mindestens einem ersten, dem Motor 12 zugeordneten Bowdenzug 26 gekoppelt ist, und mindestens einen zweiten Mitnehmer 25, der mit mindestens einem zweiten, dem manuellen Betätigungselement 17 zugeordneten Bowdenzug 21 gekoppelt ist.

Die Mitnehmer 24, 25 und das Kupplungselement 23 sind in einem Gehäuse 27 verschiebbar gelagert. Das Gehäuse 27 weist einen schalenförmigen Gehäuseteil 27.1 und einen Gehäusedeckel 27.2 auf. Der Deckel 27.2 ist über ein Scharnier 27.3, vorzugsweise Filmscharnier aufklappbar mit dem schalenförmigen Gehäuseteil 27.1 verbunden. Der Deckel 27.2 und das Gehäuseteil 27.1 weisen einander zugeordnete Rastelemente auf. Die Rastelemente sind aus federelastischen Rastnasen 28 und diesen zugeordneten Ausnehmungen 29 gebildet. Die Ausnehmungen 29 sind an der dem Scharnier 27.3 gegenüberliegenden Längsseite des Gehäuseteils 27.1 ausgebildet. Die Rastnasen 28 sind dementsprechend an der dem Scharnier 27.3 gegenüberliegenden Längsseite des Deckels 27.2 an demselben angeformt.

Das Gehäuse 27, und zwar das schalenförmige Gehäuseteil 27.1 weist längliche, im Wesentlichen geradlinige Rippen 27.4 zur Führung des Kupplungselements 23 und/oder der Mitnehmer 24, 25 auf. In dem dargestellten Ausführungsbeispiel sind die Rippen 27.4 an der Gehäusebodeninnenseite ausgebildet. Anstelle der Rippen 27.4 können auch im Wesentlichen geradlinige Nuten und/oder Schlitze zur Führung des Kupplungselements 23 und/oder der Mitnehmer 24, 25 in dem Gehäuse 27 ausgebildet sein. Das Kupplungselement 23 weist Nuten auf, in welche die Vorsprünge bzw. Rippen 27.4 des Gehäusebodens mit Spiel eingreifen.

Das Kupplungselement 23 umfasst ein plattenförmiges Element 23.1, das im Bereich seiner Längmittelachse eine geschlitzte Aufnahmeöse 23.2 zum Einhängen eines mit dem Ende der Drahtseele 18.1 des Bowdenzuges 18 fest verbundenen Nippels aufweist oder trägt. Des Weiteren ist das Kupplungselement 23 mit einem Federelement 30 versehen, mittels dem es in eine Ausgangsposition vorgespannt ist. Das Federelement 30 besteht vorzugsweise aus einer Schraubenfeder. Ein Ende der Schraubenfeder 30 ist auf einen an der Innenseite des Gehäuses 27 angeordneten, vorzugsweise angeformten Stift 27.5 aufgesteckt. Das andere Ende der Schraubenfeder 30 ist in eine hülsenförmige Aufnahme 23.3 eingesteckt, die mit dem Kupplungselement 23 verbunden ist. Die hülsenförmige Aufnahme 23.3 liegt der geschlitzten Aufnahmeöse 23.2 gegenüber. Die Längsmittelachse des Stiftes 27.5 bzw. der Schraubenfeder 30 sowie die Längsmittelachse der hülsenförmigen Aufnahme 23.3 fluchten miteinander. Vorzugsweise fluchtet auch der Endabschnitt der Drahtseele 18.1 des Bowdenzuges 18 mit der Längsmittelachse des Stiftes 27.5 bzw. mit der Längsmittelachse der hülsenförmigen Schraubenfederaufnahme 23.3.

In bzw. an dem plattenförmigen Teil 23.1 des Kupplungsstückes 23 sind ferner Nuten, Schlitze 23.6 und/oder Rippen zur Führung der Mitnehmer 24, 25 ausgebildet. Der jeweilige Mitnehmer 24, 25 ist im Wesentlichen in Form eines länglichen Quaders oder Stabes ausgebildet. Er weist an einem seiner Enden eine geschlitzte Aufnahmeöse 24.1 bzw. 25.1 zum Einhängen eines mit dem Ende der Drahtseele 21.1 bzw. 26.1 des Bowdenzuges 21, 26 fest verbundenen Nippels auf. An seinem anderen Ende hat der Mitnehmer 24, 25 einen an einer Kante des plattenförmigen Teils 23.1 des Kupplungselements 23 angreifenden Vorsprung 24.2, 25.2. Die Aufnahmeöse 24.1, 25.1 des Mitnehmers 24, 25 ist dabei abgewandt von der Aufnahmeöse 23.2 des Kupplungselements 23 angeordnet, oder anders ausgedrückt, der Vorsprung 24.2, 25.2 des Mitnehmers 24, 25 greift an der Kante des plattenförmigen Teils 23.1 des Kupplungsstückes 23 an, an welcher sich dessen Aufnahmeöse 23.2 befindet.

Des Weiteren ist in den Figuren 2 bis 8 zu erkennen, dass in der Wandung des Gehäuses 27 Öffnungen 27.6 ausgebildet sind, die der Einführung von Enden der Bowdenzüge 18, 21, 26 in das Gehäuseinnere dienen. Die Öffnungen 27.6 sind in dem schalenförmigen Gehäuseteil 27.1 vorgesehen und münden an der von Gehäuseteil 27.1 und Gehäusedeckel 27.2 definierten Teilungsebene. An den Öffnungen 27.6 sind Hülsen 31 formschlüssig festgelegt, wobei die jeweilige Hülse 31 ein Ende des schlauchförmigen Bowdenzugmantels (Bowdenzughülle) aufnimmt. Die Drahtseele des Bowdenzuges 18, 21, 26 endet im Inneren des Gehäuses 27. Zur formschlüssigen Festlegung der Hülsen 31 weisen diese jeweils zwei beanstandete ringförmige Vorsprünge 31.1 auf bzw. haben an ihrer Mantelfläche eine Ringnut 31.2. An der Unterseite des Gehäusedeckels 27.2 sind Vorsprünge 27.7 mit muldenförmigen Vertiefungen ausgebildet, die den Öffnungen 27.6 in der Wandung des schalenförmigen Gehäuseteils 27.2 zugeordnet sind. Die Vorsprünge 27.7 greifen in der Schließstellung des Deckels 27.2 in die Ringnute 31.2 der Bowdenzughülsen 30, so dass sich eine zusätzliche formschlüssige Festlegung der Hülsen 31 an dem Gehäuse 27 ergibt.

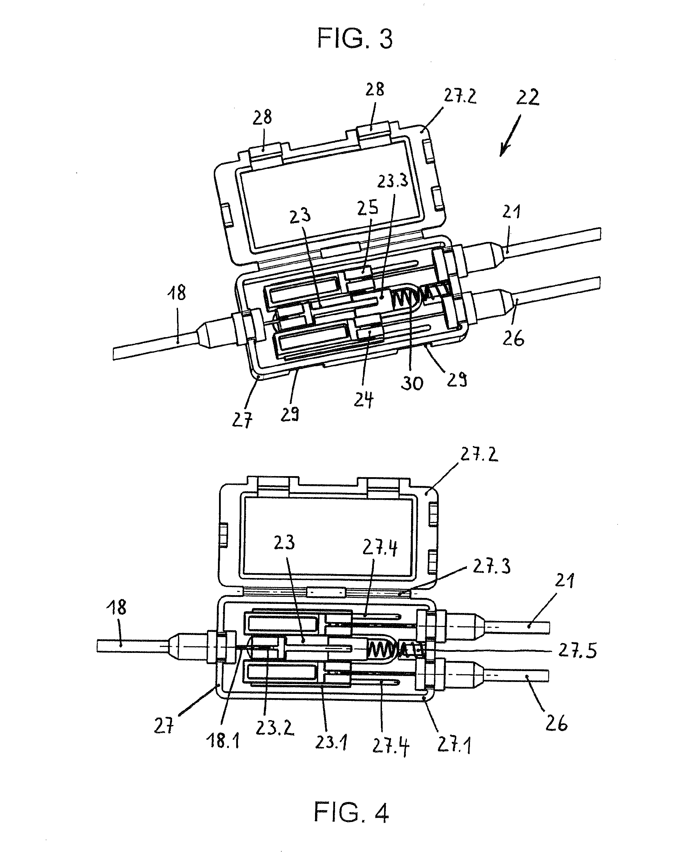

Die Figuren 3 und 4 zeigen das Kupplungselement 23 und die Mitnehmer 24, 25 in ihrer Ausgangsstellung (Nullstellung). Die Mitnehmer 24, 25 liegen in dieser Stellung nebeneinander und im Wesentlichen auf gleicher Höhe. Die Schraubenfeder 30 ist in der Ausgangsstellung nicht oder nur wenig komprimiert.

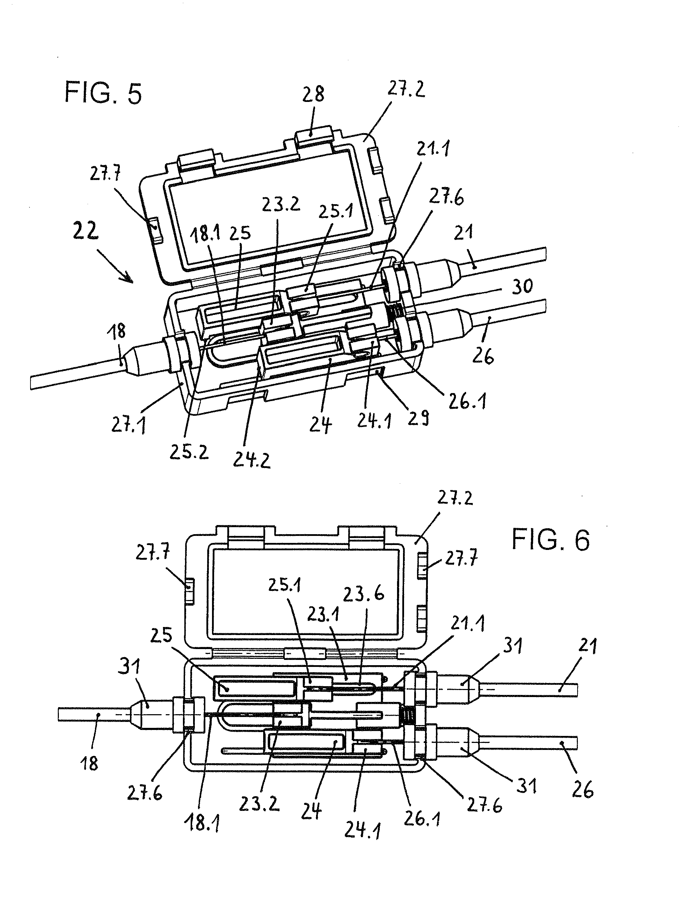

In den Figuren 5 und 6 ist dagegen eine durch Betätigung des dem Motor 12 zugeordneten Bowdenzuges 26 bewirkte Stellung der Bowdenzugweiche 22 dargestellt. Der dem Motor 12 zugeordnete Mitnehmer 24 wurde mit dem Bowdenzug 26 näher an dessen Hülse 31 herangezogen. Die Schraubenfeder 30 ist in dieser Stellung stark zusammengedrückt. Der in Richtung Gehäuseboden vorstehende Vorsprung 24.2 des Mitnehmers 24 liegt an der Kante des plattenförmigen Teils 23.1 des Kupplungselements 23 an und hat das Kupplungselement 23 in Richtung der im Gehäuse 27 festgelegten Hülse 31 des Bowdenzuges 26 mitgenommen. Der andere Mitnehmer 25, der dem Bowdenzug 21 und dem manuellen Betätigungselement 17 zugeordnet ist, ist in seiner Ausgangsstellung (Nullstellung) gemäß den Figuren 3 und 4 verblieben.

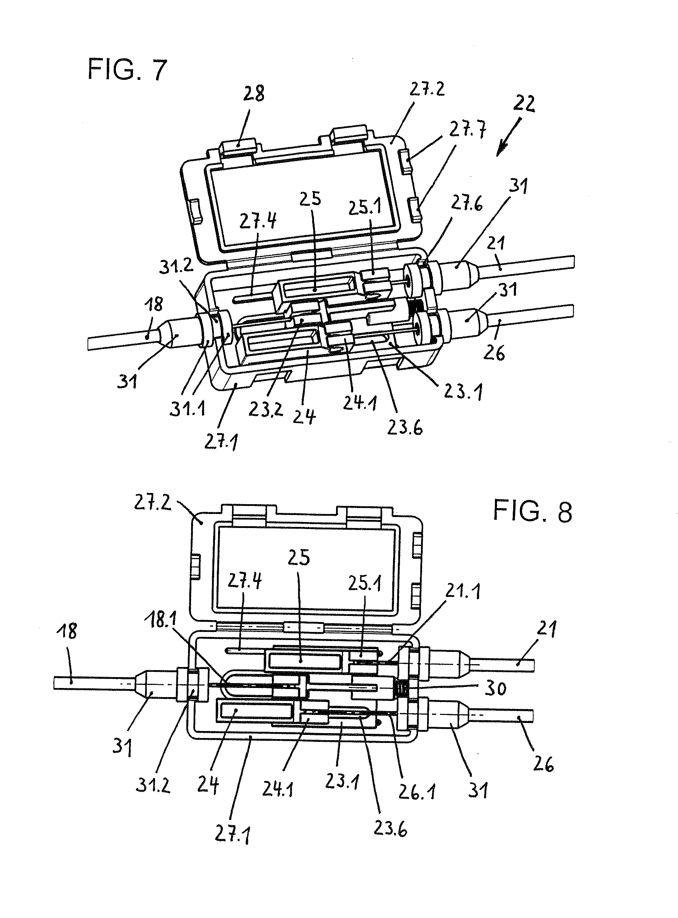

In den Figuren 7 und 8 ist schließlich eine durch Betätigung des dem manuellen Betätigungselement 17 zugeordneten Bowdenzuges 21 bewirkte Stellung der Bowdenzugweiche 22 gezeigt. Der dem manuellen Betätigungselement 17 zugeordnete Mitnehmer 25 wurde mittels des Bowdenzuges 21 näher an dessen Hülse 31 herangezogen. Die Schraubenfeder 30 ist wiederum stark zusammengedrückt. Der in Richtung Gehäuseboden vorstehende Vorsprung 25.2 des Mitnehmers 25 liegt an der Kante des plattenförmigen Teils 23.1 des Kupplungselements 23 an und hat das Kupplungselement 23 in Richtung der im Gehäuse 27 festgelegten Hülse 31 des Bowdenzuges 21 mitgenommen. Der dem Motor 12 zugeordnete Mitnehmer 24 ist dagegen in seiner Ausgangsstellung (Nullstellung) gemäß den Figuren 3 und 4 verblieben.

Die Bowdenzugweiche 22 lässt sich aufgrund der Flexibilität der Bowdenzüge 18, 21, 26 variabel innerhalb eines Spülkastens 1 anordnen. Die Länge der Bowdenzüge 18, 21, 26 lässt sich hierzu bedarfsgerecht anpassen, wobei das Gehäuse 27 der Bowdenzugweiche 22 jeweils durch den mit dem Kupplungsstück 23 gekoppelten (dritten) Bowdenzug 18 mit Abstand zu dem Ablaufventil 2 angeordnet werden kann. Die an den Enden der Bowdenzug-Drahtseelen angebrachten Nippel sind mit der jeweiligen Drahtseele fest oder als Klemmnippel lösbar verbunden. Der Motor 12 ist mit einem flexiblen Stromnetz- bzw. Steuerungskabel 13 versehen.

Die Ausführung der vorliegenden Erfindung ist nicht auf das vorstehend beschriebene und in der Zeichnung dargestellte Ausführungsbeispiel beschränkt. Vielmehr sind zahlreiche Varianten möglich, wie sie in den beiliegenden Ansprüchen definiert sind.

Insbesondere kann die erfindungsgemäße Vorrichtung nicht nur bei einem sanitären Spülkasten 1 zum Einsatz kommen. Ebenso ist auch eine Verwendung bei anderen sanitären Ablaufventilen, beispielsweise einem Badewannen-Ablaufventil möglich. Insbesondere können die Bowdenzüge 16 und 18 auch ohne eine lösbare Halterung 11 gemäß Fig. 2 unmittelbar am Gehäuse eines Ablaufventils 2 angebracht sein. Die Verwendung einer lösbaren Halterung 11 gemäß Fig. 2 ist jedoch insbesondere im Hinblick auf eine Vormontage der Bowdenzüge 16, 18, der manuellen Betätigungselemente 17, 19 und des elektromotorischen Antriebes 12 vorteilhaft und daher bevorzugt.

## Patentansprüche

1. Vorrichtung zur Betätigung eines sanitären Ablaufventils, insbesondere Spülkasten-Ablaufventils (2) oder Badewannen-Ablaufventils, mit mindestens einem elektromotorischen Antrieb (12) und einer mindestens ein erstes manuelles Betätigungselement (17) aufweisenden manuellen Auslöseeinrichtung, wobei der elektromotorische Antrieb (12) über mindestens einen ersten Bowdenzug (26) das Ablaufventil (2) betätigt und das mindestens eine erste manuelle Betätigungselement (17) mit mindestens einem zweiten Bowdenzug (21) zur Betätigung des Ablaufventils (2) versehen ist, **dadurch gekennzeichnet, dass** der mindestens eine erste Bowdenzug (26), der dem elektromotorischen Antrieb (12) zugeordnet ist, mit mindestens einem ersten Mitnehmer (24) gekoppelt ist, und der mindestens eine zweite Bowdenzug (21), der dem mindestens einen ersten manuellen Betätigungselement (17) zugeordnet ist, mit mindestens einem zweiten Mitnehmer (25) gekoppelt ist, wobei die Mitnehmer (24, 25) relativ zueinander bewegbar sind, und wobei der jeweilige Mitnehmer (24 bzw. 25) bei einer auf ihn über den mit ihm gekoppelten Bowdenzug (26 bzw. 21) übertragenden Bewegung ein Kupplungselement (23) mitnimmt, an dem mindestens ein dritter Bowdenzug (18) angekoppelt ist, der zur Betätigung des Ablaufventils (2) mit demselben gekoppelt ist.

2. Vorrichtung nach Anspruch 1,
**dadurch gekennzeichnet, dass** die manuelle Auslöseeinrichtung mindestens ein zweites manuelles Betätigungselement (19) aufweist, das mit mindestens einem vierten Bowdenzug (16) versehen ist, der zur Betätigung des Ablaufventils (2) mit demselben gekoppelt ist.

3. Vorrichtung nach Anspruch 1 oder 2,
**dadurch gekennzeichnet, dass** die Mitnehmer (24, 25) und das Kupplungselement (23) in einem Gehäuse (27) bewegbar, vorzugsweise verschiebbar gelagert sind, wobei das Gehäuse (27) einen schalenförmigen Gehäuseteil (27.1) und einen abnehmbaren oder aufklappbaren Deckel (27.2) aufweist.

4. Vorrichtung nach Anspruch 3,
**dadurch gekennzeichnet, dass** der Deckel (27.2) und das schalenförmige Gehäuseteil (27.1) mit einander zugeordneten Rastelementen (28, 29) versehen sind.

5. Vorrichtung nach Anspruch 3 oder 4,
**dadurch gekennzeichnet, dass** das Gehäuse (27) Nuten, Schlitze und/oder Rippen (27.4) zur Führung des Kupplungselements (23) und/oder der Mitnehmer (24, 25) aufweist.

6. Vorrichtung nach einem der Ansprüche 3 bis 5,
**dadurch gekennzeichnet, dass** in der Wandung des Gehäuses (27) Ausnehmungen oder Öffnungen (27.6) ausgebildet sind, an denen Hülsen (31) zur Aufnahme eines Endes des schlauchförmigen Mantels des ersten, zweiten und dritten Bowdenzuges (18, 21, 26) formschlüssig festgelegt sind.

7. Vorrichtung nach einem der Ansprüche 1 bis 6,
**dadurch gekennzeichnet, dass** das Kupplungselement (23) und/oder die Mitnehmer (24, 25) mit mindestens einem Federelement (30) in eine Ausgangsposition vorgespannt sind.

8. Vorrichtung nach einem der Ansprüche 1 bis 7,
**dadurch gekennzeichnet, dass** das Kupplungselement (23) mit einem plattenförmigen Element (23.1) versehen ist, das Nuten, Schlitze (23.6) und/oder Rippen zur Führung der Mitnehmer (24, 25) aufweist.

9. Vorrichtung nach Anspruch 8,
**dadurch gekennzeichnet, dass** der jeweilige Mitnehmer (24, 25) einen an einer Kante des plattenförmigen Elements (23.1) des Kupplungselements (23) angreifenden Vorsprung (24.2, 25.2) aufweist.

10. Vorrichtung nach einem der Ansprüche 1 bis 9,
**dadurch gekennzeichnet, dass** der jeweilige Mitnehmer (24, 25) im Wesentlichen in Form eines Stabes oder länglichen Quaders ausgebildet ist.

## Claims

1. Device for actuating a sanitary drain valve, in particular a cistern drain valve (2) or bathtub drain valve, comprising at least one electromotive drive (12) and a manual trigger apparatus comprising at least one first manual actuation element (17), the electromotive drive (12) actuating the drain valve (2) by means of at least one first Bowden cable (26) and the at least one first manual actuation element (17) being provided with at least one second Bowden cable (21) for actuating the drain valve (2), **characterised in that** the at least one first Bowden cable (26), which is assigned to the electromotive drive (12), is coupled to at least one first catch (24), and the at least one second Bowden cable (21), which is assigned to the at least one first manual actuation element (17), is coupled to at least one second catch (25), the catches (24, 25) being movable relative to one another, and the respective catch (24 or 25) driving a coupling element (23) when movement is applied to said catch by means of the Bowden cable (26 or 21, respectively) coupled thereto, to which coupling element at least one third Bowden cable (18) is connected, which at least one third Bowden cable is coupled to the drain valve (2) for the actuation thereof.

2. Device according to claim 1,
**characterised in that** the manual trigger apparatus comprises at least one second manual actuation element (19) which is provided with at least one fourth Bowden cable (16) which is coupled to the drain valve (2) for the actuation thereof.

3. Device according to either claim 1 or claim 2,
**characterised in that** the catches (24, 25) and the coupling element (23) are mounted so as to be movable, preferably translatable, within a housing (27), the housing (27) comprising a shell-shaped housing part (27.1) and a detachable or hinged lid (27.2).

4. Device according to claim 3,
**characterised in that** the lid (27.2) and the shell-shaped housing part (27.1) are provided with mutually associated locking elements (28, 29).

5. Device according to either claim 3 or claim 4,
**characterised in that** the housing (27) comprises grooves, slots and/or ribs (27.4) for guiding the coupling element (23) and/or the catches (24, 25).

6. Device according to any of claims 3 to 5,
**characterised in that** recesses or openings (27.6) are formed in the wall of the housing (27), to which recesses or openings sleeves (31) for receiving an end of the tubular sheath of the first, second and third Bowden cable (18, 21, 26) are secured with a positive fit.

7. Device according to any of claims 1 to 6,
**characterised in that** the coupling element (23) and/or the catches (24, 25) are preloaded into a starting position by at least one spring element (30).

8. Device according to any of claims 1 to 7,
**characterised in that** the coupling element (23) is provided with a plate-shaped element (23.1) which comprises grooves, slots (23.6) and/or ribs for guiding the catches (24, 25).

9. Device according to claim 8,
**characterised in that** the respective catch (24, 25) comprises a protrusion (24.2, 25.2) which acts on one edge of the plate-shaped element (23.1) of the coupling element (23).

10. Device according to any of claims 1 to 9,
**characterised in that** the respective catch (24, 25) is substantially in the shape of a rod or an elongate cuboid.

## Revendications

1. Dispositif d'actionnement d'un clapet de sortie sanitaire, en particulier d'un clapet de chasse d'eau (2) ou d'un clapet de sortie de baignoire, avec au moins un commande électromotrice (12) et au moins un dispositif de déclenchement manuel comprenant un premier élément d'actionnement manuel (17), sachant que la commande électromotrice (12) actionne le clapet de sortie (2) par l'intermédiaire d'au moins un premier câble Bowden (26) et que le premier élément d'actionnement manuel (17) au moins prévu est pourvu d'au moins un deuxième câble Bowden (21) pour l'actionnement du clapet de sortie (2), **caractérisé en ce que** le premier câble Bowden (26) au moins prévu, qui est associé à la commande électromotrice (12), est couplé avec au moins un premier entraîneur (24) et que le deuxième câble Bowden (21) au moins prévu, qui est associé au premier élément d'actionnement manuel (17) au moins prévu, est couplé avec au moins un deuxième entraîneur (25), sachant que les entraîneurs (24, 25) peuvent être déplacés l'un par rapport à l'autre, et sachant que entraîneur concerné (24 ou respectivement 25), lors d'un mouvement, qui lui est transmis par l'intermédiaire du câble Bowden (26 ou respectivement 21) qui est couplé avec lui, entraîne un élément de couplage (23) avec lequel est couplé au moins un troisième câble Bowden (18) qui, pour l'actionnement du clapet de sortie (2), est couplé avec celui-ci.

2. Dispositif selon la revendication 1,
**caractérisé en ce que** le dispositif de déclenchement manuel est doté d'au moins un deuxième élément d'actionnement manuel (19) qui est équipé d'au moins un quatrième câble Bowden (16), qui, pour l'actionnement du clapet de clapet de sortie (2), est couplé avec celui-ci.

3. Dispositif selon revendication 1 ou 2,
**caractérisé en ce que** les entraîneurs (24, 25) et l'élément de couplage (23) sont logés, mobiles, de préférence coulissant, dans un boîtier (27), sachant que le boîtier (27) est doté d'une partie de boîtier en forme de coque (27.1) et d'un couvercle (27.2) amovible ou rabattable.

4. Dispositif selon la revendication 3,
**caractérisé en ce que** le couvercle (27.2) et la partie de boîtier en forme de coque (27.1) sont dotés d'éléments de blocage (28, 29) qui sont associés les uns aux autres.

5. Dispositif selon revendication 3 ou 4,
**caractérisé en ce que** le boîtier (27) est doté de rainures, de fentes et / ou de nervures (27.4) pour le guidage de l'élément de couplage (23) et / ou des entraîneurs (24, 25).

6. Dispositif selon l'une des revendications 3 à 5,
**caractérisé en ce que**, dans la paroi du boîtier (27), sont formés des évidements ou des ouvertures (27.6), dans lesquels sont fixés par emboîtement des douilles (31) qui sont destinées à recevoir une extrémité du manteau en forme de boyau du premier, du deuxième et du troisième câble Bowden (18, 21, 26).

7. Dispositif selon l'une des revendications 1 à 6,
**caractérisé en ce que** l'élément de couplage (23) et / ou les entraîneurs (24, 25) sont précontraints dans une position de départ au moyen d'au moins un élément élastique (30).

8. Dispositif selon l'une des revendications 1 à 7,
**caractérisé en ce que** l'élément de couplage (23) est doté d'un élément en forme de plaque (23.1) qui est pourvu de rainures, fentes (23.6) et / ou de nervures pour le guidage de l'entraîneur (24, 25).

9. Dispositif selon la revendication 8,
**caractérisé en ce que** les entraîneurs (24, 25) sont respectivement dotés d'une saillie (24.2, 25.2) qui attaque un bord de l'élément en forme de plaque (23.1).

10. Dispositif selon l'une des revendications 1 à 9,
**caractérisé en ce que** les entraîneurs (24, 25) est respectivement configurés sensiblement en forme de barre ou de quadrilatère allongé.
